Europäisches Patentamt

European Patent Office

Office européen des brevets

(19)

(11) Veröffentlichungsnummer: **0 206 376**
**B1**

(12) # EUROPÄISCHE PATENTSCHRIFT

(45) Veröffentlichungstag der Patentschrift:
13.06.90

(51) Int. Cl.⁵: **H02G 1/12**

(21) Anmeldenummer: **86200861.2**

(22) Anmeldetag: **20.05.86**

(54) **Abisoliergerät.**

(30) Priorität: **17.06.85 SE 8502980**

(43) Veröffentlichungstag der Anmeldung:
**30.12.86 Patentblatt 86/52**

(45) Bekanntmachung des Hinweises auf die Patenterteilung:
**13.06.90 Patentblatt 90/24**

(84) Benannte Vertragsstaaten:
**CH DE FR GB IT LI SE**

(56) Entgegenhaltungen:
**WO-A-84/04856**
**FR-A- 2 215 729**
**FR-A- 2 354 650**

(73) Patentinhaber: **C.A. Weidmüller GmbH & Co.,**
**Postfach 950 Paderborner Strasse 175,**
**D-4930 Detmold 14(DE)**

(72) Erfinder: **Undin, Hans, Södra Skogsrundan 35,**
**S-184 00 Akersberga(SE)**
Erfinder: **Wiener, Hans, Drakskeppsvägen 10,**
**S-183 63 Täby(SE)**

(74) Vertreter: **Klauber, Tomas, Patentbyran Klauber & Co.**
**AB Kungstensgatan 48, S-113 59 Stockholm(SE)**

**EP 0 206 376 B1**

## Beschreibung

Die Erfindung bezieht sich auf ein Abisoliergerät der im Oberbegriff des angeschlossenen Patentanspruchs 1 angegebenen Art, bei dem, nachdem das Schneidorgan in die Isolationsschicht des Leiters eingedrungen ist, durch Drehung des Gerätes um den eingelegten Leiter herum der oder die anfänglich nur stellenweisen Einschnitte auf den ganzen Umfang des Leiters bzw. der Isolationsschicht erweitert werden. Derartige Abisoliergeräte werden meistens bei Koaxialkabeln angewandt, wo mehr als ein Einschnitt in die Umhüllungsschichten (Isolationsschichten und Abschirmschicht) benötigt wird.

In WO84/04856 ist ein Abisoliergerät der im Oberbegriff des angeschlossenen Patentanspruchs 1 angeführten Art beschrieben, welches ein Gehäuse in Form eines mit einem Handgriffsteil versehenen Bügels aufweist. Etwa in der Mitte des Gehäuses ist ein Aufnahmelager für einen zu bearbeitenden Leiter, und im Handgriffsteil eine winkelrecht zum Aufnahmelager verlaufende geradlinige Führungsbahn vorgesehen, in der ein Schieberelement gleitbar angeordnet ist. Das dem Aufnahmelager zugewandte Ende des Schieberelementes ist als eine seitliche Begrenzung in das Aufnahmelager einführbar, wobei von der entgegengesetzten Seite Abisoliermesserorgane in das Aufnahmelager hineinragen. Das Gerät weist u.a. den Nachteil einer ziemlich sperrigen Bauweise auf.

Ein minder sperriges Gerät ähnlicher Art ist in der US-A 4 130 031 beschrieben. Dieses vorbekannte Gerät hat ein Gehäuse in Form einer ersten Backe in der für den bearbeiteten Leiter ein Aufnahmelager in Form eines V-förmigen Einschnittes vorgesehen ist. In das Aufnahmelager ragen eine oder mehrere Messerklingen eines Schneidorgans hinein. An ein Ende dieser ersten Backe ist eine zweite Backe schwenkbar angelenkt, und am gegenüber liegenden Ende der ersten Backe ist eine Verriegelungs- bzw. Sperreinrichtung für die zweite Backe in ihrer an die erste Backe anliegenden Lage angeordnet. Die Verriegelungseinrichtung hat die Gestalt eines als Handhabe dienenden Auges durch welches der Benutzer einen Finger der Hand hindurchstecken kann und aus dem ein stabförmiger starrer Vorsprung herausragt der das freie Ende der zweiten Backe umschließen und verriegeln kann.

Es hat sich herausgestellt, daß diese Art der Verriegelung in manchen Fällen, wie z.B. bei harten und verkrusteten Isolationsschichten, beschwerlich sein kann.

Die vorliegende Erfindung stellt sich die Aufgabe ein Abisoliergerät der betreffenden Art zu schaffen bei dem sich die Verriegelung und der Einschnitt zügiger ergeben, und welches gleichzeitig einen gedrungenen Aufbau aufweist. Diese Aufgabe wird auf die Weise gelöst, welche aus dem kennzeichnenden Teil des Patentanspruchs 1 hervorgeht. In den angeschlossenen Unteransprüchen sind vorteilhafte Weiterentwicklungen erfaßt.

Die Erfindung soll nun an Hand angeschlossener schematischer Zeichnungen, die sich auf Ausführungsbeispiele beziehen, näher erläutert werden. Hierbei zeigt

Fig. 1 eine erste Ausführungsform des erfindungsgemässen Gerätes in Seitenansicht, teilweise in Schnitt;

Fig. 2 eine zweite Ausführungsform im Längsschnitt entlang der der Ebene II-II in Fig. 4 und in grösserem Mass-stab;

Fig. 3 einen Schnitt entlang der Ebene III-III in Fig. 2;

Fig. 4 einen Schnitt entlang der Ebene IV-IV in Fig. 2;

Fig. 5 eine Draufsicht auf eine Befestigungsvorrichtung im Gerät gemäss Fig. 2 bis 4;

Fig. 6 eine alternative Lösung der Anordnung von Stellschrauben im Gerät gemäss Fig. 2 bis 5;

Fig. 7 zwei verschiedene Einsätze gemäss Fig. 6;

Fig. 8 eine dritte Ausführungsform des erfindungsgemässen Gerätes in Seitenansicht, teilweise im Schnitt;

Fig. 9 in grösserem Mass-stab einen Kassettenhalter des Gerätes gemäss Fig. 8 in Vorderansicht; und

Fig. 10 den Kassettenhalter gemäss Fig. 9 in Seitenansicht und mit eingesetzter Kassette.

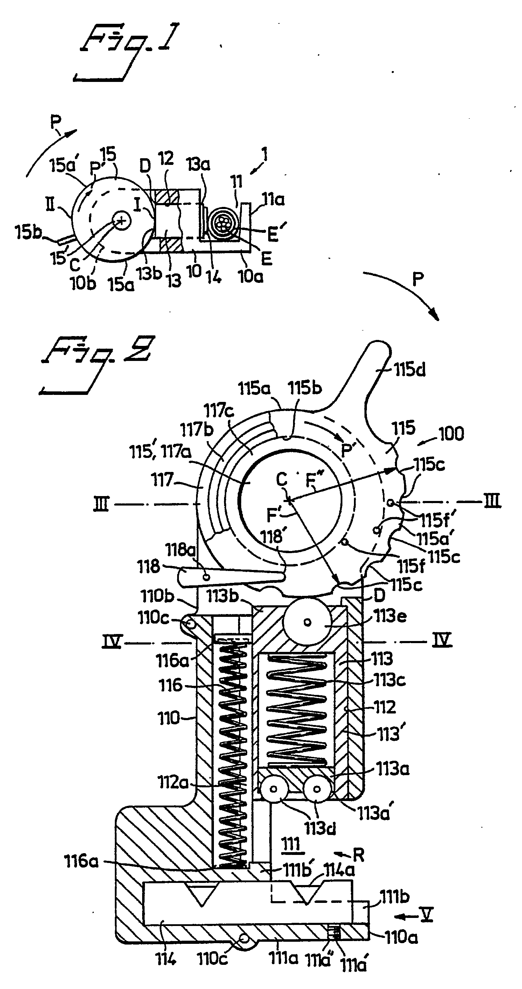

Gemäss Fig. 1 ist bei einem Gerät 1 an einem Ende 10a eines länglichen Gehäuses 10 ein Aufnahmelager 11 für einen zu bearbeitenden elektrischen Leiter $\underline{E}$ angeordnet. Das Aufnahmelager 11 hat die Gestalt eines Troges der nach aussen hin von einem starr mit den übrigen Teilen des Gehäuses 10 verbundenem und eine äussere Seitenbegrenzung des Aufnahmelagers 11 bildenden Abschlussglied 11a in Form einer starren Seitenwand begrenzt ist. Am entgegengesetzten Ende 10b des Gehäuses 10 ist ein Zapfen 15' als Drehlager für ein exzentrisches Kammelement 15 angeordnet. Zwischen dem Aufnahmelager 11 und dem Drehlager 15' verläuft im Gehäuse 10 eine geradlinige Führungsbahn 12 in der ein Schieber- oder Stempelelement 13 in Gestalt eines Klosses gleitbar angeordnet ist. Das dem Aufnahmelager 11 zugewandte Ende 13a des Schieberelementes 13 bildet eine innere Seitenbegrenzung des Aufnahmelagers 11 und trägt ein Schneidorgan in Gestalt einer Messerklinge 14.

Das Ende 10b des Gehäuses 10 ist gabelförmig gestaltet und das Kammelement 15 hat die Form einer vollen Exzenterscheibe die auf dem Zapfen 15' drehbar gelagert ist. Die Längsachse des Zapfens 15' bildet die Drehachse $\underline{C}$ des Drehlagers und des Kammelementes, die parallel mit dem im Aufnahmelager 11 eingelegten Leiter $\underline{E}$ und senkrecht zu der Führungsbahn 12 verläuft. Die bezüglich des Zapfens 15' exzentrische Aussenperipherie 15a der Exzenterscheibe 15 liegt an dem vom Aufnahmelager 11 abgewand-

2

ten Ende 13b des Schieberelementes 13 an. Das Schieberelement 13 ist in der Zeichnung in seiner vom Aufnahmelager 11 entferntesten Lage, d.h. der Nichteingriffslage, dargestellt, bei der sich die Exzenterscheibe 15 in ihrer ersten extremen Drehlage befindet, in der sie mit der dem Zapfen 15' nächst belegenen Stelle I ihrer Aussenperipherie 15a an dem Schieberelement 13 anliegt.

Wenn die Exzenterscheibe 15 z.B. durch Betätigung an der - gegebenenfalls angerauhten - Aussenperipherie 15a in beliebiger Richtung um 180° gedreht wird, wird das Schieberelement 13 zwangsläufig dem Aufnahmelager 11 angenähert, und die Messerklinge 14 dringt in die Isolationsschicht $E'$ des Leiters $E$ bis zu einer durch die Länge des Vorschubes des Schieberelementes 13 vorgewählten Tiefe ein. Die Exzenterscheibe 15 ist in ihrer zweiten extremen Drehlage, der End-Drehlage, in der sie mit der vom Zapfen 15' entferntesten Stelle II ihrer Aussenperipherie 15a am Schieberelement 13 anliegt, durch Selbsthemmung verriegelt bzw. gesperrt, und somit ist auch das Schieberelement 13 in seiner Wirkungslage gesperrt.

Derjenige Teil der Aussenperipherie 15a, der beim Drehen der Exzenterscheibe 15 am Schieberelement 13 vorbei gleitet und es beaufschlägt, ist ein Eingriffsteil der Aussenperipherie 15a der sich allmählich (zwischen den Stellen I und II) von der Drehachse ($C$ = Zapfen 15') der Exzenterscheibe 15 entfernt. Der übrige Teil der Aussenperipherie 15a kann als Betätigungsteil betrachtet werden.

Alternativ kann ein Anschlagzapfen 15b aus der Aussenperipherie 15a der Exzenterscheibe 15 herausragen. Bei dieser Ausführungsform bildet nur die in Fig. 1 obere Hälfte der Peripherie 15a (zwischen den Punkten I und II) einen exzentrischen Eingriffsteil 15a' des Kammelementes 15, da die Exzenterscheibe 15 dann nur im Uhrzeigersinn $P$ gedreht werden kann, und zwar bis der Zapfen 15b bei $D$ an das Gehäuse 10 anschlägt. Der Zapfen 15b ist derart placiert, dass sich die Exzenterscheibe 15 beim genannten Anschlag in ihrer zweiten extremen Lage (oder unbedeutend darüber hinaus) befindet.

Durch Festlegung der "Steigung" des Eingriffsteiles der Exzenterscheibe 15 wird bereits im Konstruktionsstadium ein für die Zügigkeit des Verriegelungsvorganges und des Eindringens des Messers 14 in die Isolationsschicht $E'$ wichtiges Parameter festgelegt.

Nachdem die Exzenterscheibe 15 in ihre Sperrlage gedreht worden ist, wird der Leiter $E$ mit der einen Hand festgehalten und das ganze Gehäuse 10 wird im Sinne des Pfeiles $P$ zumindest einmal um den Leiter $E$ herum gedreht, wodurch der ursprünglich nur stellenweise Einschnitt des Messers 14 auf den ganzen Umfang der Isolationsschicht $E'$ verlängert wird.

Es ist offensichtlich, dass eine Messerklinge auch an der Seitenwand 11a angeordnet werden kann, und zwar sowohl anstatt, als auch zusätzlich zu der Messerklinge 14 am Schieberelement 13, und dass an beiden Stellen anstatt einer Messerklinge auch mehrere vorgesehen werden können. Ferner kann das Aufnahmelager 11 auch von oben her (gemäss Fig. 1) geschlossen sein, so dass der Leiter nur in seiner Längsrichtung (und nicht auch quer dazu) eingeführt werden kann.

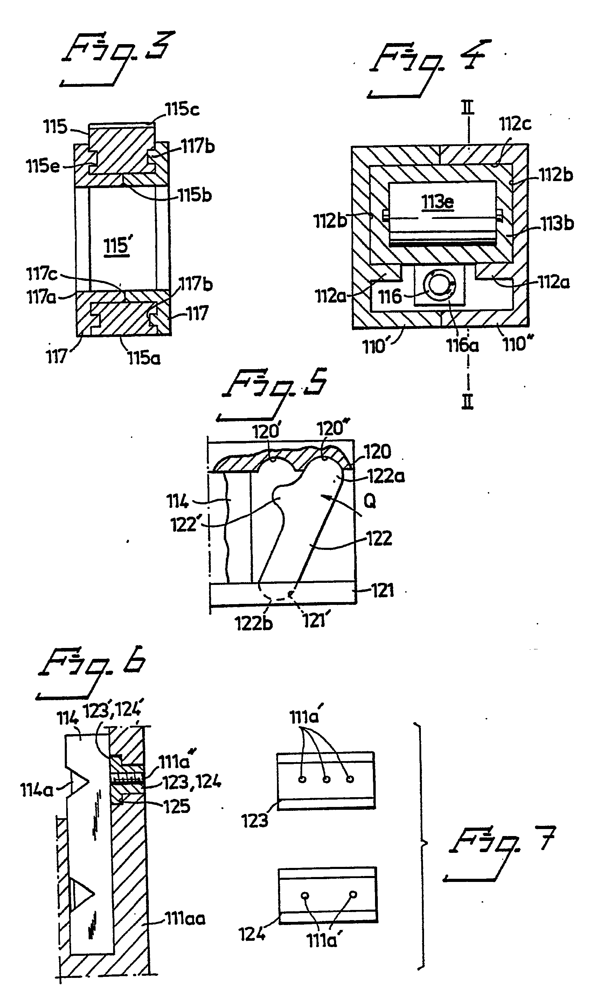

Bei einem Gerät 100 in einer zweiten Ausführungsform gemäss Fig. 2-4 ist an einem Ende 110a eines länglichen Gehäuses 110 ein trogformiges Aufnahmelager 111 für einen zu bearbeitenden (nicht dargestellten) isolierten Leiter angeordnet. Am gabelförmig gestalteten entgegengesetzten Ende 110b des Gehäuses 110 ist ein Drehlager 117c angeordnet, dessen Beschaffenheit später näher erläutert wird. In einer geradlinigen Führungsbahn 112 die sich im Gehäuse 110 zwischen dem Aufnahmelager 111 und dem Drehlager 117c erstreckt, ist ein Schieberelement 113 gleitbar angeordnet. Das Aufnahmelager 111 wird nach aussen hin von einer starr mit den übrigen Teilen des Gehäuses 110 verbundenen Seitenwand 111a begrenzt, die gleichzeitig die äussere Begrenzung einer Aufnahmekammer 111b bildet die für ein Schneidorgan in Form einer austaschbaren Kassette 114 mit einer oder mehreren Messerklingen 114a vorgesehen ist. Eine derartige Kassette, die ausserhalb des Rahmens der vorliegenden Erfindung liegt, ist bekannt und in der bereits erwähnten Patentskrift US,A, 4,130,031 beschrieben. Die Aufnahmekammer bildet somit einen Kassettenhalter 114b.

In der in Fig. 2 dargestellten Ausführungsform weist das Schieberelement 113 einen in der Führungsbahn 112 gleitbar gelagerten Hohlkörper 113' auf in welchem an dem dem Aufnahmelager 111 zugewandten Ende ein beweglicher Rollenträger 113a mit zwei frei drehbaren Gleitrollen 113d verschiebbar angeordnet ist. Am entgegengesetzten zweiten Ende des Hohlkörpers 113' ist in einem festen Kloss 113b eineeinzige Gleitrolle 113e grösseren Durchmessers als die Rollen 113d drehbar gelagert. Zwischen den beiden Klossen 113a und 113b ist eine erste Druckfeder 113c vorbestimmter Spannkraft angeordnet. Ein Anschlag 113a' verhindert dass der bewegliche Kloss 113a aus dem Hohlkörper 113' herausgedrückt wird.

Die Spannkraft der Druckfeder 113c kann auch veränderbar oder einstellbar sein, z.B. indem die ganze Feder und/oder der Kloss 113a austauschbar gestaltet wird, oder indem ein Ende der Feder 113c an einer Stellschraube verankert wird, die es ermöglicht die Länge bzw. den Kompressionszustand der Feder 113c in Ausgangslage zu regeln. Ausserdem kann anstelle der Druckfeder 113c ein elastisches Element, z.B. ein Gummiblock, angewandt werden.

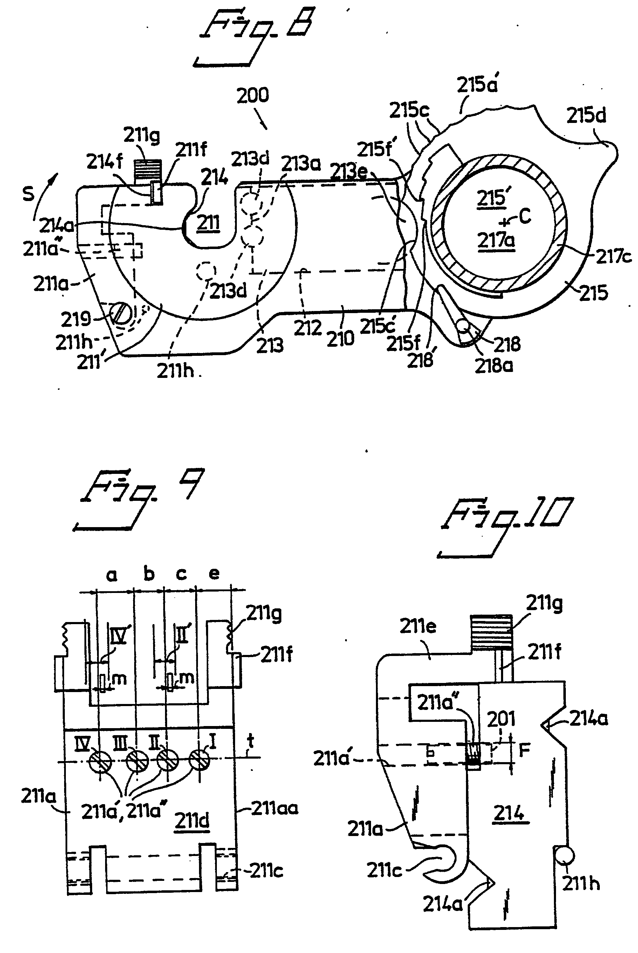

Die Führungsbahn 112 des Schieberelementes 113 verläuft senkrecht zu einem im Aufnahmelager 111 eingelegten Leiter und zur Drehachse $C$ eines Drehlagers 117c welches noch näher beschrieben wird, und umfasst zwei untere Seitenschienen 112a, zwei Seitenleitflächen 112b (Fig. 4) und gegebenenfalls eine Deckenfläche 112c.

Von einer zweiten (im allgemeinen schwächeren) Druckfeder 116, die einerseits in einer Vertiefung 116a in einer die Aufnahmekammer 111b abgrenzenden Innenwand 111b', und anderseits an einer aus dem Schieberelement 113 herausragenden Stütze 116a verankert ist, wird das Schieberelement 113 dauernd vom Aufnahmelager 111 weggedrückt und ans Kammelement 115 angedrückt. Somit ist das Schieberelement 113 als Ganzes gegen die Kraft der Feder 116 im Gehäuse 110 verschiebbar, und innerhalb des Schieberelementes 113 kann der gegenseitige Abstand der beiden Klösse 113a und 113b gegen die Kraft der Feder 113c vermindert werden.

Das Kammelement 115 besteht aus einer ringförmigen Scheibe die einerseits eine von einer kreisrunden Innenperipherie 115b begrenzte mittige Öffnung 115', und anderseits eine Aussenperipherie 115a aufweist welche in ihrem Eingriffsteil 115a' exzentrisch zur Drehachse C des Kammelementes 115, die mit dem Mittelpunkt der kreisförmigen Innenperipherie 115b zusammenfällt, verläuft. Mit "exzentrisch" wird in der vorliegenden Beschreibung und in den angeschlossenen Patentansprüchen ein Verlauf verstanden bei dem sich der Eingriffsteil des Kammelementes allmählich mit gewählter "Steigung" von der Drehachse C des Kammelementes entfernt, hierbei aber unter Umständen nicht kreisförmig verlaufen·muss. Der Eingriffsteil 115a' ist mit einer Anzahl seichter Einkerbungen bzw. Einrastkerben 115c für die Gleitrolle 113e versehen welche ein Eingriffselement des Schieberelementes 113 bildet und durch Wirkung der Druckfeder 116 in die einzelnen Einrastkerben 115c eingeführt wird.

Da die Einkerbungen 115c entlang einer Bahn angeordnet sind, die sich immer mehr von der Drehachse C entfernt, ist z.B. die Entfernung F" grösser als die Entfernung F'. Der Eingriffsteil 115a' wird an dem von der Drehachse C am meisten entfernten Ende von einem fingerförmigen Vorsprung 115d begrenzt.

Die mittige Öffnung 115' ist so gross, dass sie ein Aufsetzen des Kammelementes 115 auf das im folgenden beschriebene,von Vorsprüngen 117c gebildete Drehlager ermöglicht.

Das gabelförmig gestaltete Ende 110b des Gehäuses 110 ist etwas enger als das Gehäuse 110 im übrigen (vgl. Fig. 3 und 4), und läuft in zwei ringförmige Laschen 117 aus. Die beiden Laschen 117 weisen eine mittige Öffnung 117a auf, die genügend gross ist, dass der Benutzer einen Finger hindurch stecken kann. An der Peripherie 117' der Öffnungen 117a sind nach innen gerichtete ringförmige Vorsprünge 117c angeordnet, die gegebenenfalls so breit sein können, dass sie sich, wie in der Fig. 3 dargestellt, berühren, und die das Drehlager für das Kammelement 115 bilden. Ausserdem kann an den Innenflächen beider Laschen 117 je ein kreisrunder, mit der Peripherie 117' der Öffnung 117a konzentrischer Vorsprung 117b angeordnet sein, wobei in den Seitenflächen des Kammelementes 115 entsprechende kreisrunde Nuten 115e zur Aufnahme der Vorsprünge 117b vorgesehen sind. Es dürfte offensichtlichsein, dass die Vorsprünge auch an den Seiten des Kammorganes 115, und die Nuten in den Innenflächen der Laschen 117 angeordnet werden können. Ferner können anstelle der kreisförmigen Vorsprünge 117c und/oder 117b nur vereinzelte vorspringende Zapfen, z.B. drei Zapfen in je 120° Winkelabstand, vorgesehen werden.

Das Gerät 100 ist ferner mit einer Sperranordnung versehen die verhindert, dass eine bestimmte End-Drehlage des Kammelementes 115 überschritten wird. Zweck dieser Sperranordnung ist zu gewährleisten, dass bei wiederholtem Abisolieren (z.B. einer Anzahl von identischen Leitern) jedesmal die einmal gefundene optimale Vorschubstrecke des Schiebergliedes 113 genau wiederholt wird. An der Flanke des Kammelementes 115 ist ein der benachbarten Einrastkerbe 115c zugeordnetes erstes Anschlagelement 115f in Form eines kurzen Zapfens angeordnet, und zwar so nahe wie möglich an die Drechachse C. In ähnlicher Weise sind auch den zwei gegen die Drehrichtung P folgenden Einrastkerben 115c Anschlagelemente, d.h. Zapfen 115f' zugeordnet, wobei jeder der nach dem ersten Zapfen 115f folgenden Zapfen 115f' etwas weiter von der Drehachse C entfernt ist als der vorhergehende. Im Gehäuse 110 ist ein Hebel 118 schwenkbar angeordnet, dessen ein Ende 118' in Kollisionslage mit einem ausgewählten Zapfen 115f, 115f' gebracht werden kann, indem der Hebel 118 an seinem Schwenkzapfen 118a entsprechend verschwenkt wird. Mit Hilfe an sich bekannter Mittel, die nicht dargestellt sind, z.B. einer auf dem Zapfen 118b angeordneten federnden Unterlagsscheibe, wird die Einstellbewegung des Hebels 118 so träge gestaltet, dass er seine Stellung jeweils nur unter Aufwand einer äusseren Einstellkraft ändert. In der Zeichnung ist diejenige Lage des Hebels 118 dargestellt, in der dass Kammelement 115 vom ersten Zapfen 115f angehalten wird.

In der Zeichnung ist ferner dargestellt, dass jeder der Zapfen 115f, 115f' genau neben der zugeordneten Einrastkerbe 115c liegt. Dies muss jedoch nicht immer der Fall sein, denn die Placierung der Zapfen 115f, 115f' hängt von der Länge und Anordnung des Hebels 118 ab. Der Hebel 118 kann kürzer oder länger als dargestellt sein, oder er kann auch im Gehäuse 110 z.B. längsverschiebbar,parallel mit der Richtung der Führungsbahn 112 angeordnet sein. Als "zugeordnet" ist somit derjenige Zapfen 115f, 115f' zu betrachten, der an das Ende 118' des Hebels 118 anstossen kann, wenn sich die betreffende Einrastkerbe 115c in Eingriffslage gegenüber der Rolle 113e befindet.

In der Fig. 5, die eine Ansicht in Richtung des Pfeiles V in Fig. 2, in etwas grösserem Mass-stab darstellt, ist eine vorteilhafte Befestigungsvorrichtung für die Messerkassette 114 im Kassettenhalter 111b dargestellt. Am oberen Ende der Aufnahmekammer 111b, dicht oberhalb des oberen Endes einer eingesetzten Messerkassette 114, sind zwei (parallel mit der Zeichnungsebene verlaufende) Nuten 120, 121 vorgesehen. In der Nute 121 ist eine vorzugsweise kreisbogenförmige Einbuchtung 121' in Seitenrichtung (d.h. ebenfalls in der Zeichnungsebene) angeordnet, und in der Nute 120 sind zwei derartige Einbuchtungen vorgesehen, 120' näher der Messerkassette 114, und 120" weiter von der Messerkassette 114 entfernt. In zwei gegeneinander liegenden Einbuchtungen 120" und 121' ist ein Riegel 122 z.B. aus Kunststoff gelagert, dessen beide Enden 122a und 122b eine den Einbuchtungen entsprechende, vorzugsweise kreisbogenförmige Peripherie aufweisen. Der Riegel 122 trägt ferner einen zur Messerkassette 114 gerichteten Vorsprung 122'.

Alle Einbuchtungen 120', 121', 120" liegen ausserhalb des Bereiches der Messerkassette 114. Wenn jedoch das in der Einbuchtung 120" befindliche Ende 122a des Riegels 122 in die Einbuchtung 120' versetzt wird (Pfeil Q), was dank der hierzu benötigten und allenfalls vorhandenen geringen Elastizität der beteiligten Teile, insbesondere des Riegels 122, und dank der oben erwähnten kreisbogenförmigen Gestaltung der beiden Riegelenden 122a, 122b möglich ist, verriegelt der Vorsprung 122' die Messerkassette 114 im Kassettenhalter 111b. Bei Entnahme der Messerkassette 114 wird der Riegel 122 wieder in die Einbuchtung 120" versetzt.

In der Seitenwand 111a (Fig. 2) sind in Bohrungen 111a' Stellschrauben 111a" eingeschraubt von denen die einzelnen Messerklingen 114a in der Messerkassette 114 bedient (justiert) werden können. In Fig. 6 und 7 ist eine vorgezogene alternative Ausführung der Lagerung der Stellschrauben 111a" dargestellt. Die austauschbaren Messerkassetten 114 können eine verschiedene Anzahl von Messerklingen, z.B. zwei oder drei, und in verschiedenen Seitenlagen, aufweisen. Damit die Stellschrauben 111a" immer genau gegenüber den einzustellenden Messern liegen, werden sie erfindungsgemäss nicht direkt in die Seitenwand 111a eingeschraubt, wie in Fig. 2 dargestellt, sondern in einen austauschbaren, in der Seitenwand lagerbaren Einsatz wie 123 oder 124.

Alle Einsätze 123, 124 haben die gleiche Umfangsform und den gleichen Querschnitt, der an dem der Aufnahmekammer 111b, d.h. der Messerkassette 114 zugewandten Ende 123', 124' breiter ist als am entgegengesetzten Ende, so dass die Einsätze 123, 124 wahlweise in ein entsprechendes Lager in Form einer Vertiefung 125 mit gleichem Querschnitt in der etwas dicker gestalteten Seitenwand 111aa eingesetzt werden können. Im dargestellten Beispiel ist der Querschnitt T-förmig. Da der Einsatz und das Lager mit der breiteren Seite des Querschnittes der Messerkassette 114 zugewandt sind, wird der Einsatz von der eingelegten Kassette 114 automatisch in der Seitenwand 111aa festgehalten und kann nach Entnahme der Messerkassette ohne weiteres herausgenommen werden. Alternativ kann der Einsatz an der Messerkassette befestigt und zusammen mit dieser aus dem Gerät herausgenommen werden und danach eventuell von der Messerkassette getrennt zu werden.

Das Gehäuse 110 ist vorzugsweise aus zwei symmetrischen Hälften 110', 110" (Fig. 4) zusammengebaut, die mittels Schrauben, Nieten od. dgl. 110c (Fig. 2) zusammengehalten werden. Beim Zusammenbau wird vorerst das Schieberelement 113 zusammengesetzt und dann, von der Feder 116 und dem Kammelement 115 gefolgt, in die eine Gehäusehälfte eingesetzt, worauf die zweite Gehäusehälfte hinzugefügt und festgemacht wird.

Das Gerät arbeitet auf folgende Weise. Der Vorsprung 115d wird in die in Fig. 2 dargestellte Lage oder noch etwas weiter nach links gedreht, und der abzuisolierende Leiter wird in das Aufnahmelager 111 eingelegt. Da das Aufnahmelager 111 die Form eines offenen Troges hat, der von den beiden genannten Seitenbegrenzungen 111a und 113a flankiert ist, kann der Leiter auch quer zu seiner Längsrichtung (d.h. in Richtung des Pfeiles R) eingelegt werden, was vorteilhafter als ein ebenfalls mögliches Einschieben in Längsrichtung ist.

Danach wird der Vorsprung 115d im Uhrzeigersinn $\underline{P}'$ gedreht, bis er gegebenenfalls bei $\underline{D}$ an das Gehäuse 110 anstosst, wobei die Gleitrolle 113e bei Uberwindung der Feder 116 von einer Einkerbung 115c in die andere überspringt. Dank der Exzentrizität des Eingriffsteiles 115a' des Kammelementes 115 wird hierbei das ganze Schieberelement 113 an das angelegte Kabel angenähert, gleichzeitig wird aber der bewegliche Kloss 115a gegen die Wirkung der Feder 113c eingedrückt.

Das Einrasten der Rolle 113e in jede der Einkerbungen 115c die weiter von der Drehachse $\underline{C}$ entfernt sind als diejenige Einkerbung 115c die der Drehachse $\underline{C}$ am nächsten liegt bildet je eine wählbare und sperrbare End-Drehlage des Kammelementes 115 in der sich das Schieberelement 113 in einer unbeweglichen Endlage befindet, in der die beiden Gleitrollen 113d mit vorbestimmter Druckkraft der Feder 113c auf das eingelegte Kabel einwirken und es an das Schneidorgan 114 andrücken. Das Schneidorgan 114 dringt in die Kabelisolation ein, so dass ein stellenweiser Einschnitt entsteht. Danach führt der Benutzer einen Finger seiner Hand durch die Öffnungen 117a in den Laschen 117 und die Öffnung 115' im Kammelement 115 hindurch, und dreht das ganze Gerät 100 ein oder mehrere Male um den im Aufnahmelager 111 eingelegten Leiter herum, wodurch der oder die ursprünglich nur stellenweisen Einschnitte des Schneidorganes 114 auf den ganzen Umfang der Isolationsschicht erweitert werden. Hierbei verändert sich die Einschnittstiefe nicht, weil durch den eingeführten Finger die Drehlage des Kammelementes 115 nicht weiter verändert wird, u.a. weil die Vorsprünge 117c den Finger des Benutzers vom Kammelement 115 trennen.

Das Gerät 200 gemäss Fig. 8 weist einen länglichen Gerätekörper 210 auf an dessen einem Ende ein trogförmiges Aufnahmelager 211 für einen zu bearbeitenden Leiter, und am anderen, gabelförmig gestalteten, Ende ein Drehlager für ein exzentrisches, mit einem Betätigungsvorsprung 215d versehenes Kammelement 215 angeordnet ist. Zwischen den beiden Lagern verläuft eine geradlinige Führungsbahn 212. Analog wie beim Gerät 100 besteht das Drehlager aus ringförmigen, nach innen des Gerätekörpers 210 gerichteten Vorsprüngen 217c welche die Peripherie einer kreisrunden Öffnung 217a im Gerätekörper 210 bilden, und auf denen das Kammelement 215 mit seiner eigenen mittigen kreisrunden Öffnung 215' drehbar aufgesetzt ist.

Das Kammelement 215 weist entlang seines Eingriffsteiles 215a' eine Anzahl von Einrastkerben 215c für die Gleitrolle 213e des Schieberelementes 213 auf, das gleicher Weise wie das Schieberelement 113 des Gerätes 100, oder auch als ein einstickiges Element beschaffen sein kann, welches an einem Ende die Gleitrolle 213e und am anderen Ende 213a zwei kleinere Rollen 213d trägt gleich dem Gerät 100. Das Gerät 200 wird auch auf die gleiche Weise wie das Gerät 100 angewendet. An einer Seite des Gerätekörpers 210 ist um das Aufnahmelager 211 herum eine hochpolierte kreisförmige und etwas vorstehende Fläche 211' angeordnet um das Drehen des Gerätes um den mit der einen Hand gehaltenen eingelegten Leiter zu erleichtern. Die Fläche 211' dient somit auch als Markierung auf welche Seite vom Gerät hin sich der bearbeitete Leiter in seiner ganzen Länge erstrecken soll.

Die austauschbare Messerkassette 214 (Fig. 10) ist in einem Kassettenhalter 211a (Fig. 9) untergebracht, der seinerseits leicht ein- und ausbaubar im Gerätekörper 210 angeordnet ist und beim Gerät 200 zusammen mit der Messerkassette 214 die äussere Seitenbegrenzung des Aufnahmelagers 211 bildet. Mittels zweiter teilweise offenen Öhre 211c ist der Kassettenhalter 211a an einem Lagerstift 219 im Gerätekörper 210 drehbar verankert und kann im Sinne des Pfeiles S bis zum Einschnappen zweier Seitenvorsprünge 211f, die an elastisch nachgiebigen Ausläufern 211e angeordnet sind, in dazu vorgesehene Aussparungen 214f in den Seitenwänden des Gerätekörpers 210 verschwenkt werden. Die in dem Kassettenhalter 211a eingelegte Messerkassette 214 wird in dieser Endlage von einem im Gerätekörper 210 in Abstand vom Lagerstift 219 vorgesehenem Anschlagelement 211h wie Zapfen od. dgl. festgehalten. Dadurch entfällt die Notwendigkeit einer umstellbaren Befestigungs- bzw. Verriegelungsanordnung wie Riegel 122 gemäss Fig. 5, bzw. der Kassettenhalter 211a übernimmt selbst diese Funktion.

Zur Herausnahme der Messerkassette 214 aus dem Halter 211a und/oder des Halters 211a aus dem Gerätekörper 210 werden die Seitenvorsprünge 211f durch Zusammendrücken von Griffen 211g wieder aus den Aussparungen 214f herausgeführt und im entgegengesetzten Sinn des Pfeiles S verschwenkt. Der Kassettenhalter 211a kann durch Aushaken der Öhre 211c aus dem Gehäuse 210 leicht ausgebaut werden und gegebenenfalls von einem Kassettenhalter mit anderwertig angeordneten Stellschrauben ersetzt werden.

Gemäss einer vorteilhaften Ausführungsform der Erfindung erübrigt sich jedoch in den meisten Fällen ein derartiger Austausch der ja dadurch bedingt ist, dass für verschiedene Abisolieraufgaben Messerkassetten mit einer verschiedenen Anzahl von verschiedentlich verteilten Messerklingen 214a erforderlich sind.

Gemäss Fig. 9 und 10, die den Kassettenhalter 211a in grösserem Mass-stab darstellen mit (Fig. 10) bzw. ohne (Fig. 9) eingesetzte Messerkassette 214 (wobei in Fig. 10 der Deutlichkeit halber auch das im Gerätekörper angeordnete Anschlagelement 211h mit dargestellt ist), sind in einer Wandung 211d des Kassettenhalters 211a vier Gewindeöffnungen 211a' für vier Stellschrauben 211a" bzw. I-IV angeordnet. Die Öffnungen 211a' sind in gegenseitigen Abständen $a$, $b$, $c$, und in einem Abstand $e$ von derjenigen Seitenkante 211aa des Kassettenhalters 211a angeordnet, welche der mit der kreisrunden Fläche 211' versehenen Seite des Gerätekörpers 210 zugekehrt ist. Die Abstände a-c sind so gewählt, dass die in den Öffnungen 211a" eingeschraubten Stellschrauben I-IV, die einen Durchmesser $F$ haben, alle Messerklingen 214a sowohl in Kassetten mit zwei Messerklingen, als auch in Kassetten mit drei Messerklingen beaufschlagen können (und natürlich auch in solchen mit einer einzigen Messerklinge).Die Stellschrauben 211a" haben eine Stirnfläche 201 mit dem genannten Durchmesser $F$. Als beispielsweise Werte können folgende Zahlen angeführt werden:

Durchmesser $F$ : 3,5 mm;
Entfernungen $a$: 4,5 mm; $b$: 3,7 mm; $c$: 3,8 mm; $e$ : 4,0 mm;
Dicke $m$ der Messerklingen 214a: 0,4mm.

Die gegenseitigen Entfernungen der Messerklingen 214a in den einzelnen Kassetten 214 entsprechen den verschiedenen Abisolieraufgaben die gelöst werden sollen. Es werden folgenden Kassetten in Erwägung gezogen:

## Tabelle 1

A) Einmesserkassette

B) Zweimesserkassette mit gegenseitigem Abstand
   der Schneidkanten der Messerklingen:            4,2 mm

C) Zweimesserkassette mit gegenseitigem Abstand
   der Schneidkanten der Messerklingen:            6,0 mm

D) Zweimesserkassette mit gegenseitigem Abstand
   der Schneidkanten der Messerklingen:          12,0 mm

E) Dreimesserkassette mit gegenseitigem Abstand
   der Schneidkanten der Messerklingen:      3,0 mm + 8,0 mm

F) Dreimesserkassette mit gegenseitigem Abstand
   der Schneidkanten der Messerklingen:      4,0 mm + 7,5 mm

Eine erste Messerklinge 214a wird in allen Kassetten in gleicher Lage gegenüber der Einstellschraube I angeordnet.

Dann ergibt sich folgendes Schema für die Einstellung der Messerklingen in den einzelnen Messerkassetten A-E:

## Tabelle 2

| Stellschrauben: | I | II | III | IV |
|---|---|---|---|---|
| Kassette A: | x | | | |
| Kassette B: | x | x | | |
| Kassette C: | x | | x | |
| Kassette D: | x | | | x |
| Kassette E: | x | x | | x |
| Kassette F: | x | x | | x |

Es ist offensichtlich, dass jede Messerklinge 214a in den gegenseitig austauschbaren Messerkassetten 214 verschiedener Typen jeweils nur von einer einzigen Stellschraube 211a' beaufschlagbar sein darf, und dies wird erfindungsgemäss dadurch erzielt, dass zumindest einige der Stellschrauben 211a' (I, II, IV im dargestellten Beispiel) an solchen Stellen im Kassettenhalter 211a angeordnet sind, wo Messerklingen 214a von zumindest zwei verschiedenen in den Kassettenhalter 211a eingesetzten Messerkassetten 214 im Bereich der Stirnfläche 201a (ø F) liegen (siehe die Anzahl der x-Markierungen in den Spalten I, II, IV in Tabelle 2).

Es erübrigt sich somit in den meisten Fällen den Kassettenhalter 211a beim Übergang von einer Messerkassette zu einer anderen auszutauschen, und die Öhre 211c können gänzlich geschlossen gestaltet werden, da es kein Bedürfnis mehr gibt den Kassettenhalter 211a leicht ausbauen zu können. Es ist somit offensichtlich, dass die erfindungsgemässe Anordnung der Stellschrauben 211a" nicht auf den Kassettenhalter 211a beschränkt ist, sondern auch bei jedem anderen Kassettenhalter anwendbar ist, z.B. demjenigen gemäss Fig. 2, oder gemäss der zitierten US,A,4,130,031.

Der Durchmesser $F$ derjenigen Stellschrauben, die Messerklingen 214a beaufschlagen sollen, die nicht an genau übereinstimmenden Stellen zu liegen kommen, sollte vorzugsweise 5-10 Mal grösser sein als die Dicke $m$ der Messerklingen. In Fig. 9 sind Bereiche II' und IV' eingezeichnet binnen deren zumindest ein gewisser Teil der Dicke $m$ der betreffenden Messerklingen 214a liegen muss. Bei der Stellschraube I besteht dieses Bedürfnis nicht, weil alle Messerkassetten 214 so konstruiert werden können, dass eine ihrer Messerklingen 214a in gleichem Abstand (e) von einer Kassettenflanke 211aa liegt, und bei der Stellschraube III besteht im beschriebenen Beispiel dieses Bedürfnis deshalb nicht, weil aus Tabelle 2 hervorgeht, dass sie nur eine einzige Messerklinge zu bedienen hat. Die Stellschrauben I und III könnten somit im vorliegenden Beispiel im Prinzip auch kleineren Durchmesser als die übrigen Stell-

7

schrauben aufweisen, aus praktischen Herstellungsgründen wird man aber meistens identische Stellschrauben 211a' an allen Orten wählen.

Es ist ferner vorteilhaft, wenn alle Stellschrauben 211a" in einer einzigen Reihe t, winkelrecht zur Richtung der Messerklingen, angeordnet werden, denn nur dann ergibt sich bei gegebener Drehbewegung der Stellschraube eine gleiche Verstellbewegung aller Messerklingen (gleiche Gewindesteigung bei allen Stellschrauben vorausgesetzt).

## Patentansprüche

1. Abisoliergerät (1, 100, 200) für mit zumindest einer Isolationsschicht (E') umhüllte elektrische Leiter (E) kreisrunden Querschnitts, welches ein Gehäuse (10, 110, 210) aufweist in dem ein Aufnahmelager (11, 111, 211) für einen zu bearbeitenden Leiter (E), eine senkrecht zum Aufnahmelager (11, 111, 211) verlaufende, geradlinige Führungsbahn (12, 112, 212), ein in dieser Führungsbahn gleitbar angeordnetes Schieberelement (13, 113, 213), dessen dem Aufnahmelager (11, 111, 211) zugewandtes Ende als eine Seitenbegrenzung des Aufnahmelagers (11, 111, 211) in dieses einführbar ist, sowie zumindest ein Schneidorgan (14, 114, 214), welches zumindest an einer Seitenbegrenzung (11a, 111a, 211a, 13a, 113a, 213a) des Aufnahmelagers (11, 111, 211) angeordnet ist, und zumindest eine Messerklinge (14, 114a, 214a) umfaßt, vorgesehen ist, wobei das Gerät (1, 100, 200) derart angeordnet ist, daß ein eingelegter Leiter (E) an das Schneidorgan (14, 114, 214) angepreßt, und das ganze Gerät (1, 100, 200) danach um den Leiter (E) herum gedreht werden kann, so daß der Einschnitt jeder Messerklinge (14, 114a) in die Isolationsschicht (E') oder -schichten des eingelegten Leiters auf den ganzen Umfang erweitert werden kann, dadurch gekennzeichnet, daß

— an einem Ende (10a, 110a) des Gehäuses (10, 110, 210) ein Aufnahmelager (11, 111, 211) für den Leiter (E) vorgesehen ist, welches nach außen hin von einem starr mit den übrigen Teilen des Gehäuses (10, 110, 210) verbundenen, und eine äußere Seitenbegrenzung des Aufnahmelagers (11, 111, 211) bildenden Abschlußglied (11a, 111a, 211a) begrenzt ist;

— am entgegengesetzten Ende (10b, 110b) des Gehäuses (10, 110, 210) ein Drehlager (15', 117c, 217c) für ein exzentrisches Kammelement (15, 115, 215) angeordnet ist, welches eine parallel mit einem im Aufnahmelager (11, 111, 211) eingelegten Leiter (E) verlaufende Drehachse (C) aufweist;

— die Führungsbahn (12, 112, 112) sich zwischen dem Aufnahmelager (11, 111, 211) und dem Drehlager (15', 117c, 217c) erstreckt;

— im Drehlager (15', 117c, 217c) ein vom Benutzer drehbares Kammelement (15, 115, 215) angeordnet ist, welches einen exzentrischen Eingriffsteil (15a', 115a', 215a') aufweist, der sich allmählich von der Drehachse (C) des Kammelementes (15, 115) entfernt, und der in Berührung mit dem zugewandten Ende (13b, 113b) des Schieberelementes (13, 113, 213) steht, so daß das Schieberelement (13, 113, 213) je nach erfolgter Drehung des Kammelementes (15, 115, 215) in gewähltem Ausmaß in Richtung zum Abschlußglied (11a, 111a, 211a) hin verschoben werden kann, wobei das Kammelement (15, 115, 215) in gewählter End-Drehlage sperrbar ist.

2. Gerät gemäss Anspruch 1, dadurch gekennzeichnet, dass das Schieberelement (13, 113, 213) von einem elastischen Element (116) dauernd an das Kammelement (15, 115, 215) angedrückt wird.

3. Gerät gemäss Anspruch 1 oder 2, dadurch gekennzeichnet, dass das Kammelement (115, 215) als eine ringförmige Scheibe gestaltet ist die eine von einer kreisrunden Innenperipherie (115b) begrenzte mittige Öffnung (115', 215') aufweist, dass das Gehäuse (10, 110, 210) an seinem einen Ende (10b, 110b) gabelförmig gestaltet ist mit zwei Laschen (117) die eine mittige Öffnung (117a, 217a) aufweisen an deren Peripherie (117') nach innen gerichtete ringförmige Vorsprünge (117c, 217c) angeordnet sind auf welchen das Kammelement (115, 215) mit seiner mittigen Öffnung (115', 215') drehbar gelagert ist, wobei die mittigen Öffnungen (117a, 217a) in den Laschen (117) so bemessen sind, dass ein Finger des Benutzers hindurch geführt werden kann.

4. Gerät gemäss irgendeinem der vorgehenden Ansprüche, dadurch gekennzeichnet, dass der Eingriffsteil (115a', 215a') des Kammelementes (115, 215) eine Vielzahl von Einrastkerben (115c, 215c, 215c') für ein Eingriffselement (113e, 213e) des Schieberelementes (113, 213) aufweist.

5. Gerät gemäss irgendeinem der vorgehenden Ansprüche, dadurch gekennzeichnet, dass, um zu verhindern, dass eine gewählte End-Drehlage des Kammelementes (115, 215) überschritten wird, am Kammelement (115, 215) eine Vielzahl von zumindest einigen wählbaren End-Drehlagen zugeordneten Anschlagelementen (115f, 115f', 215f, 215f') angeordnet ist, wobei jedes gegen die Drehrichtung (P) des Kammelementes (115, 215) nach dem ersten Anschlagelement (115f, 215f) folgende Anschlagelement (115f', 215f') weiter von der Drehachse (C) entfernt ist als das vorhergehende, und im Gehäuse (110, 210) ein einstellbarer Hebel (118, 218) angeordnet ist, dessen eines Ende (118', 218') in Kollisionslage mit einem gewählten Anschlagelement (115f, 115f', 215f, 215f') gebracht werden kann.

6. Gerät gemäss den Patentansprüchen 4 und 5, dadurch gekennzeichnet, dass jedes Anschlagelement (115f, 115f', 215f, 215f') je einer Einrastkerbe (115c, 215c) zugeordnet ist.

7. Gerät gemäss irgendeinem der vorgehenden Ansprüche, dadurch gekennzeichnet, dass das Aufnahmelager (11, 111, 211) die Form eines von den beiden genannten Seitenbegrenzungen (11a, 111a, 211a; 13a, 113a, 213a) flankierten Troges hat in den der Leiter (E) auch quer (R) zu seiner Längsrichtung eingelegt werden kann.

**EP 0 206 376 B1**

8. Gerät gemäss irgendeinem der vorgehenden Ansprüche, bei dem das Schneidorgan von einer austauschbaren Messerkassette (114, 214) mit zumindest einer länglichen Messerklinge (114a, 214a) besteht, **dadurch gekennzeichnet**, dass die Kassette (114, 214) senkrecht zur Richtung der Führungsbahn (112, 212) als ein Teil der genannten äusseren Seitenbegrenzung (111a, 211a) des Aufnahmelagers (111, 211) verriegelbar angeordnet ist.

9. Gerät gemäss Anspruch 8, **dadurch gekennzeichnet**, dass die genannte äussere Seitenbegrenzung einen im Gehäuse (210) schwenkbar und in einer Endlage verriegelbar angeordneten Kassettenhalter (211a) umfasst und dass im Gehäuse (210) ein Anschlagelement (211h) angeordnet ist, welches die Kassette (214a) im Kassettenhalter (211a) festhält wenn sich dieser in seiner genannten Endlage befindet.

10. Gerät, insbesondere gemäss irgendeinem der vorgehenden Ansprüche, **dadurch gekennzeichnet**, dass zur Justierung von in austauschbaren Messerkassetten (114, 214) untergebrachten Messerklingen (114a, 214a) Stellschrauben (111a', I-IV) in einem Einsatz (123, 124) bzw. Kassettenhalter (211a) angeordnet sind der gleichzeitig mit der betreffenden Messerkassette (114, 214) austauschbar ist.

11. Gerät gemäss Anspruch 10, **dadurch gekennzeichnet**, dass der Einsatz (123, 124) einen Querschnitt aufweist der an dem der Messerkassette (114) zugewandten Ende (123', 124') breiter als am entgegengesetzten Ende ist.

12. Gerät, insbesondere gemäss einem der Ansprüche 1-9, bei dem das Schneidorgan aus einer austauschbaren Messerkassette (114, 214) mit zumindest zwei länglichen Messerklingen (114a, 214a) besteht, wobei jede Messerklinge (114a, 214a) von einer einzigen im Kassettenhalter angeordneten Stellschraube (211a") beaufschlagbar ist, **dadurch gekennzeichnet**, dass zumindest einige der Stellschrauben (211a") an solchen Stellen im Kassettenhalter (211a) angeordnet sind, wo Messerklingen (114a, 214a) von zumindest zwei verschiedenen in den Kassettenhalter (211a) einsetzbaren Messerkassetten (114, 214) im Bereich der Stirnfläche (201a) einer Stellschraube (211a") liegen.

13. Gerät gemäss Anspruch 12, **dadurch gekennzeichnet**, dass der Durchmesser (D) der genannten Stirnfläche (201a) zumindest fünfmal so gross ist wie die Dicke (m) der Messerklingen (114a, 214a).

14. Gerät gemäss Anspruch 12 oder 13, **dadurch gekennzeichnet**, dass alle Stellschrauben (215a") in einer zur Richtung der Messerklingen senkrechten Reihe (t) liegen.

15. Gerät gemäss irgendeinem der Ansprüche 12-14, **dadurch gekennzeichnet**, dass bei allen Messerkassetten (114, 214) eine erste Messerklinge (114a, 214a) an gleicher Stelle bezüglich der Messerkassette (114, 214) und einer zugeordneten ersten Stellschraube (I) liegt.

16. Gerät gemäss Anspruch 15, **dadurch gekennzeichnet**, dass für Zweimesserkassetten mit Messerabständen 4,2 mm bzw. 6 mm bzw. 12 mm und für Dreimesserkassetten mit Messerabständen 3 mm und 8 mm bzw. 4 mm und 7,5 mm vier Stellschrauben in gegenseitigen Abständen von (c) 3,8 mm, (b) 3,7 mm und (a) 4,5 mm von der ersten Stellschraube (I) aus gerechnet angeordnet sind, wobei die Messerschneiden (114, 214) eine Dicke (m) von 0,3-0,5 mm und zumindest die zweite und vierte Stellschraube (II, IV) einen Durchmesser (D) von 3,3-3,6 mm aufweisen, und die erste Messerklinge (114a, 214a) in allen Messerkassetten (114, 214) an gleicher Stelle bezüglich der Messerkassette (114, 214) und der ersten Stellschraube (I) angeordnet ist.

## Claims

1. Cable stripping device (1, 100, 200) for electric conductors (E) of circular cross-section which are encapsuled by at least one insulating layer (E'), comprising a housing (10, 110, 210) in which is provided a reception socket (11, 111, 211) for a conductor (E) to be worked on, a straight-line guide track (12, 112, 212) extending perpendicularly to the reception socket (11, 111, 211), a slide element (13, 113, 213) which is slideably arranged in said guide track and with its end facing the reception socket (11, 111, 211) insertable into the reception socket (11, 111, 211) to serve as lateral limit, as well as at least one cutting member (14, 114, 214) which is disposed at least at one lateral limit (11a, 111a, 211a, 13a, 113a, 213a) of the reception socket (11, 111, 211), and comprises at least one knife blade (14, 114a, 214a), in which respect the device is arranged such that an inserted conductor (E) is pressed against the cutting member (14, 114, 214), and the entire device (1, 100, 200) is then turned around the conductor (E) so that the incision of each knife blade (14, 114a) into the insulating layer(s) (E') of the inserted conductor can be extended around the entire circumference, characterised in that
— at one end (10a, 110a) of the housing (10, 110, 210), a reception socket (11, 111, 211) for the conductor (E) is provided which is defined toward the outside by an end piece (11a, 111a, 211a) which is rigidly attached to the other parts of the housing (10, 110, 210), forming an external lateral limit of the reception socket (11, 111, 211);
— at the opposite end (10b, 110b) of the housing (10, 110, 210), a rotary bearing (15', 117c, 217c) for an eccentric notch element (15, 115, 215) is disposed with a rotational axis (C) which extends parallel with a conductor (E) inserted into the reception socket (11, 111, 211);
— the guide track (12, 112, 212) extends between the reception socket (11, 111, 211) and the rotary mount (15', 117c, 217c);
— in the rotary bearing (15', 117c, 217c), a user-operated rotary notch element (15, 115, 215) is disposed which comprises an eccentric insertion member (15a', 115a', 215a') which gradually distances itself from the rotary axis (C) of the notch element (15, 115) and which is in contact with the facing end (13b, 113b) of the slide element (13, 113, 213) so that after a completed rotation of the notch element (15, 115, 215) the slide element (13, 113, 213) can be displaced to a selectable extent in the direction of the end piece (11a, 111a, 211a) whereby the notch element (15, 115, 215) is lockable in a selected rotational end position.

2. Device according to claim 1, characterised in that the slide element (13, 113, 213) is permanently pressed onto the notch element (15, 115, 215) by a resilient element (116).

3. Device according to claim 1 or 2, characterised in that the notch element (115, 215) is a circular disc including a central aperture (115', 215'), defined by a circular inside periphery (115b), that the housing (10, 110, 210) is at one of its ends (10b, 110b) fork-shaped and comprises two lugs (117) with a central space (117a, 217a) with inwardly facing projections (117c, 217c) at their periphery (117'), onto which projections the notch element (115, 215) is rotatably mounted by way of its central aperture (115', 215'), in which respect the central spaces (117a, 217a) in the lugs (117) are dimensioned such that a finger of the operator can be passed through.

4. Device according to any one of the above claims, characterised in that the insertion member (115a', 215a') of the notch element (115, 215) has a plurality of notches (115c, 215c, 215c') for a notch-engaging member (113e, 213e) of the slide element (113, 213).

5. Device according to any one of the above claims, characterised in that, in order to avoid passing a selected rotary end position of the notch element (115, 215), the notch element (115, 215) has associated with it a plurality of stop elements (115f, 115f', 215f, 215f'), of which at least some are associated with selectable rotary end positions, in which respect each stop element (115f', 215f') following the first stop element (115f, 215f) – as seen in counter-rotary direction (P) of the notch element (115, 215) – is further removed from the rotational axis (C) than the previous element, and in the housing (110, 210) an adjustable lever (118, 218) is disposed, the one end (118', 218') of which can be brought into a colliding position with a chosen stop element (115f, 115f', 215f, 215f').

6. Device according to patent claims 4 and 5, characterised in that each stop element (115f, 115f', 215f, 215f') is associated with a respective notch (115c, 215c).

7. Device according to any one of the above claims, characterised in that the reception socket (11, 111, 211) has the shape of a trough, flanked by both the aforementioned lateral limits (11a, 111a, 211a; 13a, 113a, 213a), into which the conductor (E) can also be placed transversely (R) to its longitudinal direction.

8. Device according to any one of the above claims, whereby the cutting member consists of an exchangeable knife cassette (114, 214) with at least one elongate knife blade (114a, 214a), characterised in that the cassette (114, 214) is disposed perpendicular to the direction of the guide track (112, 212) as part of the mentioned outer lateral limit (111a, 211a) of the reception socket (111, 211) and is lockable.

9. Device according to claim 8, characterised in that the mentioned outer lateral limit embraces a cassette holder (211a) which is fitted to be tiltable in the housing (210) and lockable in an end position, and that a stop element (211h) is positioned in the housing (210), which element holds the cassette (214a) in the cassette holder (211a) when the latter is in its aforesaid end position.

10. Device, in particular according to any one of the above claims, characterised in that for the adjustment of knife blades (114a, 214a), contained in exchangeable knife cassettes (114, 214), adjusting screws (111a', I–IV) are disposed in an insert (123, 124) or a cassette holder (211a) respectively which is exchangeable along with the respective knife cassette (114, 214).

11. Device according to claim 10, characterised in that the insert (123, 124) has a cross-section which is wider at the end facing the knife cassette (114) than at the opposite end.

12. Device, in particular according to one of the claims 1–9, wherein the cutting member consists of an exchangeable knife cassette (114, 214) with at least two elongate knife blades (114a, 214a), in which respect each knife blade (114a, 214a) is impinged upon by a single adjusting screw (211a") in the cassette holder, characterised in that at least some of the adjusting screws (211a") are placed at locations in the cassette holder (211a) where knife blades (114a, 214a) of at least two different knife cassettes, which are insertable into the cassette holder (211a), are located in the area of the end surface (201a) of an adjusting screw (211a").

13. Device according to claim 12, characterised in that the diameter (D) of the aforesaid end surface (201a) is at least five times as large as the tickness (m) of the knife blades (114a, 214a).

14. Device according to claim 12 or 13, characterised in that all adjusting screws (215a") are positioned in a row (t) which is perpendicular to the direction of the knife blades.

15. Device according to any one of the claims 12–14, characterised in that in all knife cassettes (114, 214), a first knife blade (114a, 214a) is in the same position relative to the knife cassette (114, 214) and an associated first adjusting screw (I).

16. Device according to claim 15, characterised in that two-knife cassettes with a knife gap of 4.2 mm or 6 mm or 12 mm respectively, and three-knife cassettes with knife gaps of 3 mm and 8 mm or 4 mm and 7.5 mm respectively have four adjusting screws arranged at mutual of (c) 3.8 mm, (b) 3.7 mm and (a) 4.5 mm, measured from the first adjusting screw (I), in which respect the knife edges (114, 214) have a thickness (m) of 0.3–0.5 mm, and at least the second and fourth adjusting screw (II, IV) has a diameter (D) of 3.3–3.6 mm, and the first knife blade (114a, 214a) is disposed in all knife cassettes (114, 214) in the same position relative to the knife cassette (114, 214) and the first adjusting screw (I).

## Revendications

1. Appareil à dénuder (1, 100, 200) destiné à un conducteur électrique (E) de section transversale circulaire enrobé par au moins une couche d'isolation (E') et présentant un boîtier (10, 110, 210) dans lequel sont prévus un support de réception (11, 111, 211) pour un conducteur (E) à traiter, une glissière (12, 112, 212) rectiligne s'étendant perpendiculairement au support de réception (11, 111, 211), un élément baladeur (13, 113, 213) disposé dans cette glissière de manière à pouvoir glisser et dont l'extrémité tournée vers le support de réception (11, 111, 211) peut être introduite dans ledit support de réception (11, 111, 211) en formant une limitation latérale de ce dernier ainsi qu'au moins un organe de coupe (14, 114, 214) qui est disposé sur au moins une limitation latérale (11a, 111a, 211a, 13a, 113a, 213a) du support de réception (11, 111, 211) et comprend au moins une lame de couteau (14, 114a, 214a), l'appareil (1, 100, 200) étant disposé de telle sorte qu'un conducteur (E) mis en place puisse être pressé contre l'organe de coupe (14, 114, 214) et que l'ensemble de l'appareil (1, 100, 200) puisse ensuite être tourné autour du conducteur (E), si bien que l'entaille réalisée par chaque lame de couteau (14, 114a) dans la ou les couches d'isolation (E') du conducteur mis en place peut être élargie sur tout le pourtour, caractérisé en ce que:
   – il est prévu à une extrémité (10a, 110a) du boîtier (10, 110, 210) un support de réception (11, 111, 211) pour le conducteur (E) qui est limité vers l'extérieur par un élément de fermeture (11a, 111a, 211a) relié de manière fixe aux autres parties du boîtier (10, 110, 210) et formant une limitation latérale extérieure du support de réception (11, 111, 211);
   – un palier de rotation (15', 117c, 217c) qui est destiné à un élément d'engrenage (15, 115, 215) excentrique et présente un axe de rotation (C) s'étendant parallèlement à un conducteur (E) mis en place dans le support de réception (11, 111, 211), est disposé à l'extrémité opposée (10b, 110b) du boîtier (10, 110, 210);
   – la glissière (12, 112, 212) s'étend entre le support de réception (11, 111, 211) et le palier de rotation (15', 117c, 217c);
   – le palier de rotation (15', 117c, 217c) comporte un élément d'engrenage (15, 115, 215) que l'utilisateur peut faire tourner et qui présente une pièce d'engrenage (15a', 115a', 215a') excentrique qui s'éloigne progressivement de l'axe de rotation (C) de l'élément d'engrenage (15, 115) et qui est en contact avec l'extrémité (13b, 113b) proche de l'élément baladeur (13, 113, 213), si bien que l'élément baladeur (13, 113, 213) peut, une fois que l'élément d'engrenage (15, 115, 215) a effectué une rotation, être déplacé de la distance voulue en direction de l'élément de fermeture (11a, 111a, 211a), l'élément d'engrenage (15, 115, 215) pouvant être bloqué dans la position de rotation terminale choisie.

2. Appareil selon la revendication 1, caractérisé en ce que l'élément baladeur (13, 113, 213) est pressé par un élément élastique (116) continuellement contre l'élément d'engrenage (15, 115, 215).

3. Appareil selon la revendication 1 ou 2, caractérisé en ce que l'élément d'engrenage (115, 215) est réalisé sous la forme d'un disque annulaire qui présente une ouverture (115', 215') centrale limitée par une périphérie intérieure (115b) circulaire, en ce que le boîtier (10, 110, 210) est réalisé en forme de fourche à l'une (10b, 110b) de ses extrémités avec deux brides (117) qui présentent une ouverture centrale (117a, 217a) sur la périphérie (117') de laquelle sont disposées des saillies annulaires (117c, 217c) orientées vers l'intérieur sur lesquelles l'élément d'engrenage (115, 215) est monté mobile en rotation avec son ouverture centrale (115', 215'), les ouvertures centrales (117a, 217a) des brides (117) étant dimensionnées de telle sorte que l'utilisateur puisse y passer un doigt.

4. Appareil selon l'une quelconque des revendications précédentes, caractérisé en ce que la pièce d'engrenage (115a', 215a') de l'élément d'engrenage (115, 215) présente une pluralité d'encoches de verrouillage (115c, 215c, 215c') pour un élément d'engrenage (113e, 213e) de l'élément baladeur (113, 213).

5. Appareil selon l'une quelconque des revendications précédentes, caractérisé en ce que pour éviter de dépasser une position de rotation terminale choisie de l'élément d'engrenage (115, 215), une pluralité d'éléments de butée (115f, 115f', 215f, 215f') associés à au moins certaines positions de rotation terminales pouvant être choisies sont disposés sur l'élément d'engrenage (115, 215), chaque élément de butée (115f', 215f') faisant suite au premier élément de butée (115f, 215f) dans le sens inverse du sens de rotation (P) de l'élément d'engrenage (115, 215) étant plus éloigné de l'axe de rotation (C) que le précédent, et en ce que le boîtier (110, 210) renferme un levier réglable (118, 218) dont l'une (118', 218') des extrémités peut être amenée en position de collision avec un élément de butée (115f, 115f', 215f, 215f') choisi.

6. Appareil selon les revendications 4 et 5, caractérisé en ce que chaque élément de butée (115f, 115f', 215f, 215f') est associé à une encoche de verrouillage (115c, 215c).

7. Appareil selon l'une quelconque des revendications précédentes, caractérisé en ce que le support de réception (11, 111, 211) a la forme d'une auge dont les flancs sont constitués par les deux limitations latérales (11a, 111a, 211a; 13a, 113a, 213a) mentionnées et dans laquelle le conducteur (E) peut être mis en place également transversalement (R) à sa direction longitudinale.

8. Appareil selon l'une quelconque des revendications précédentes dans lequel l'organe de coupe est constitué par une cartouche de lames (114, 214) amovible comportant au moins une lame de couteau (114a, 214a) allongée, caractérisé en ce que la cartouche (114, 214) est disposée de manière à pouvoir être verrouillée perpendiculairement à la direction de la glissière (112, 212) en tant que partie de la limitation latérale (111a, 211a) extérieure mentionnée du support de réception (111, 211).

9. Appareil selon la revendication 8, caractérisé en ce que la limitation latérale extérieure mentionnée comprend un support de cartouche (211a) disposé de manière à pouvoir pivoter dans le boîtier (210) et à pouvoir être verrouillé dans une position extrême et en ce que le boîtier (210) renferme un élément de butée (211h) qui maintient la cartouche (214a) dans le support de cartouche (221a) lorsque ce dernier se trouve dans sa position extrême mentionné.

10. Appareil, en particulier selon l'une quelconque des revendications précédentes, caractérisé en ce que pour réaliser l'ajustage de lames de couteau (114a, 214a) logées dans des cartouches de lames (114, 214) amovibles, des vis de réglage (111a', I–IV) sont disposées dans un insert (123, 124) ou support de cartouche (211a) qui peut être remplacé en même temps que la cartouche de lames (114, 214) concernée.

11. Appareil selon la revendication 10, caractérisé en ce que l'insert (123, 124) présente une section transversale qui, à l'extrémité (123', 124') tournée vers la cartouche de lames (114), est plus large qu'à l'extrémité opposée.

12. Appareil, en particulier selon l'une des revendications 1 à 9, dans lequel l'organe de coupe est constitué par une cartouche de lames (114, 214) amovible avec au moins deux lames de couteau allongées (114a, 214a), chaque lame de couteau (114a, 214a) pouvant être ajustée par une seule vis de réglage (211a″) disposée dans le support de cartouche, caractérisé en ce que au moins certaines des vis de réglage (211a″) sont disposées dans le support de cartouche (211a) à des endroits où des lames de couteau (114a, 214a) d'au moins deux cartouches de lames (114, 214) différentes pouvant être mises en place dans le support de cartouche (211a) se trouvent dans la zone de la surface frontale (210a) d'une vis de réglage (211a″).

13. Appareil selon la revendication 12, caractérisé en ce que le diamètre (D) de la surface frontale (201a) mentionnée représente au moins cinq fois l'épaisseur (m) des lames de couteau (114a, 214a).

14. Appareil selon la revendication 12 ou 13, caractérisé en ce que toutes les vis de réglage (215″) se trouvent sur une rangée (t) perpendiculaire à la direction des lames de couteau.

15. Appareil selon l'une quelconque des revendications 12 à 14, caractérisé en ce que dans toutes les cartouches de lames (114, 214), une première lame de couteau (114a, 214a) se trouve au même endroit par rapport à la cartouche de lame (114, 214) et à une première vis de réglage (I) associée.

16. Appareil selon la revendication 15, caractérisé en ce que pour des cartouches à deux lames avec un écartement entre les lames de 4,2 mm ou 6 mm ou 12 mm et pour des cartouches à trois lames avec un écartement entre les lames de 3 mm et 8 mm ou 4 mm et 7,5 mm, quatre vis de réglage sont disposées à des distances respectives de (c) 3,8 mm, (b) 3,7 mm et (a) 4,5 mm calculées à partir de la première vis de réglage (I), les tranchants de lame (114, 214) présentant une épaisseur (m) comprise entre 0,3 et 0,5 mm et au moins la deuxième et la quatrième vis de réglage (II, IV) un diamètre (D) compris entre 3,3 et 3,6 mm, et la première lame de couteau (114a, 214a) étant disposée dans toutes les cartouches de lames (114, 214) au même endroit par rapport à la cartouche de lames (114, 214) et à la première vis de réglage (I).

*Fig.1*

*Fig.2*

EP 0 206 376 B1

Fig. 3

Fig. 4

Fig. 5

Fig. 6

Fig. 7

Fig. 8

Fig. 9

Fig.10